## Europäisches Patentamt
## European Patent Office
## Office européen des brevets

(11) Numéro de publication: **0 045 253**
**B1**

(12) **FASCICULE DE BREVET EUROPEEN**

(45) Date de publication du fascicule du brevet:
**17.09.86**

(21) Numéro de dépôt: **81401182.1**

(22) Date de dépôt: **24.07.81**

(51) Int. Cl.⁴: **B 60 T 8/32**, B 60 T 8/88,
B 64 C 25/46

(54) **Dispositif antidérapant pour système de freinage.**

(30) Priorité: **29.07.80 FR 8016705**

(43) Date de publication de la demande:
**03.02.82 Bulletin 82/5**

(45) Mention de la délivrance du brevet:
**17.09.86 Bulletin 86/38**

(84) Etats contractants désignés:
**DE GB IT**

(56) Documents cités:
**FR - A - 1 407 168**
**FR - A - 2 372 058**
**FR - A - 2 402 557**
**US - A - 3 520 575**
**US - A - 3 915 508**
**US - A - 4 006 941**

(73) Titulaire: **COMPAGNIE D'INFORMATIQUE MILITAIRE SPATIALE ET AERONAUTIQUE, 25, rue de Courcelles, F-75008 Paris (FR)**

(72) Inventeur: **Sirvin, Pierre, THOMSON-CSF SCPI - 173, bld Haussmann, F-75360 Paris Cedex 08 (FR)**

(74) Mandataire: **Benoit, Monique, THOMSON-CSF SCPI 19, avenue de Messine, F-75008 Paris (FR)**

ACTORUM AG

## Description

La présente invention a pour objet un dispositif antidérapant pour système de freinage.

Il est connu de l'art antérieur, par exemple du brevet français N° 1 561 272, de commander un dispositif antidérapant en utilisant comme valeur de consigne l'accélération de la roue à freiner, c'est-à-dire que le système antidérapant est mis en action lorsque l'accélération de la roue à freiner dépasse une valeur négative prédéterminée. En effet, lorsqu'une roue, du fait d'un freinage trop important, se trouve dans une situation telle qu'elle risque de se bloquer, sa décélération augmente brutalement. Un tel dispositif n'est susceptible de fonctionner que lorsque le mécanisme de blocage de la roue est déjà au moins partiellement engagé. Il en résulte que la commande antidérapante manque de progressivité et, sur des supports relativement glissants, on se trouve en présence d'une succession d'actionnements par à-coups du système antidérapant.

Il est connu de la demande de brevet français 2 372 058 un dispositif antidérapant à régulation de vitesse. Un tel dispositif régule les roues freinées en maintenant leur vitesse à une valeur de consigne égale à une fonction de la vitesse de référence, laquelle est celle du véhicule. Le glissement g de la roue, qui s'exprime par la formule

$$g = \frac{V_a - v}{V_a}$$

où $V_a$ représente la vitesse du véhicule et v la vitesse réelle de la roue, est ainsi maintenu à une valeur déterminée, en général de l'ordre de 15%, ce qui correspond au meilleur coefficient d'adhérence roue/sol. Dans le cas où le véhicule est équipé d'un freinage automatique suivant une vitesse programmée $V_P$, on substitue la vitesse programmée à la fonction de la vitesse du véhicule à l'entrée du régulateur d'antidérapage, pour que le freinage se réalise selon la vitesse programmée, qui deviendra alors une vitesse de consigne, de façon que la vitesse du véhicule, donc sa décélération suive une loi déterminée. Le régulateur d'antidérapage reçoit alors soit le signal de vitesse programmée $V_P$, soit un signal de vitesse consigne $V_c$ élaboré à partir du signal de vitesse véhicule $V_a$ par exemple en multipliant $V_a$ par le facteur 1-g. La vitesse de référence considérée par le régulateur sera alors représentée par exemple par le plus grand des signaux $V_P$ et $V_c$. La substitution de la vitesse de consigne $V_c$ à la vitesse de programme $V_p$ sera ainsi automatique et progressive.

Lorsque des pannes se produisent au niveau de la mesure de la vitesse du véhicule, ce dispositif a pour inconvénient de mettre hors service le système antidérapant: en effet, la vitesse de consigne qui est déterminée à partir de la vitesse du véhicule va devenir égale à zéro. Par conséquent, le plus grand des signaux sera $V_p$, c'est-à-dire la vitesse programmée, et le freinage sera élaboré uniquement à partir de cette valeur.

D'autre part, le brevet FR-A-2 402 557 envisage de mesurer la vitesse d'un aéronef à l'aide des roues non freinées du train avant et décrit un dispositif de commande pour système de freinage antidérapant susceptible de fonctionner même en l'absence de valeurs mesurées acceptables pour la vitesse de l'aéronef.

En particulier, ce document décrit un dispositif antidérapant pour système de freinage dans lequel on mesure la vitesse d'un aéronef à freiner et celle de roues à freiner et comprenant: un dispositif de sélection élaborant une vitesse de référence à partir d'au moins une valeur mesurée de la vitesse de l'aéronef, lorsqu'au moins une valeur mesurée de la vitesse de l'aéronef, lorsqu'au moins une valeur mesurée de ladite vitesse est acceptable, et élaborant une vitesse de référence selon une loi de substitution dans le cas contraire, et un circuit d'actionnement d'un système antidérapant produisant une diminution de l'action de freinage produite par un système de commande de freinage lorsque la vitesse d'au moins une roue freinée est inférieure à ladite vitesse de référence, pondérée par un coefficient de glissement toléré. La présente invention concerne un dispositif de ce type dans lequel, en outre, les roues à freiner sont constituées en groupes de roues comportant des roues placées symétriquement par rapport à l'axe de l'aéronef, chaque groupe comprenant un circuit d'actionnement, ledit dispositif comportant au moins deux dispositifs de mesure (A à H) de vitesse, associés respectivement à au moins deux groupes de roues à freiner et comprenant chacun une mesure de la vitesse de l'aéronef et une mesure de la vitesse de chacune des roues du groupe, l'action de défreinage n'étant exercée que sur les groupes de roues dont au moins une roue est proche des conditions de blocage.

On peut utiliser avantageusement la dérivée $\gamma_{REF}$ de la vitesse de référence comme valeur de mesure.

Selon un mode de réalisation de l'invention, les dispositifs de mesure de vitesse et les dispositifs de sélection sont réalisés en technique numérique, et un convertisseur numérique-analogique est disposé entre la sortie de chaque dispositif de mesure et l'entrée de chaque circuit actionnant un système antidérapant.

L'invention sera mieux comprise par référence aux dessins ci-annexés et où:

– la figure 1 représente un schéma synoptique suivant l'invention,

– la figure 2a représente un schéma synoptique d'un mode de réalisation de l'invention,

– la figure 2b représente un schéma synoptique d'un autre mode de réalisation suivant l'invention,

– la figure 3 illustre un mode de réalisation du circuit A de la figure 2a,

– la figure 4 est un schéma indiquant la position des roues d'un avion,

– la figure 5 est un schéma d'un mode de réalisation perfectionné suivant l'invention,

– la figure 6 représente un mode de réalisation du circuit E de la figure 5,

– la figure 7 représente un mode de réalisation du circuit d'autorisation 42 représenté à la figure 6,

– la figure 8 représente un schéma dérivateur de la valeur de référence pour introduire celle-ci comme valeur de mesure dans la commande du circuit de freinage,

– la figure 9 représente un schéma synoptique suivant l'invention.

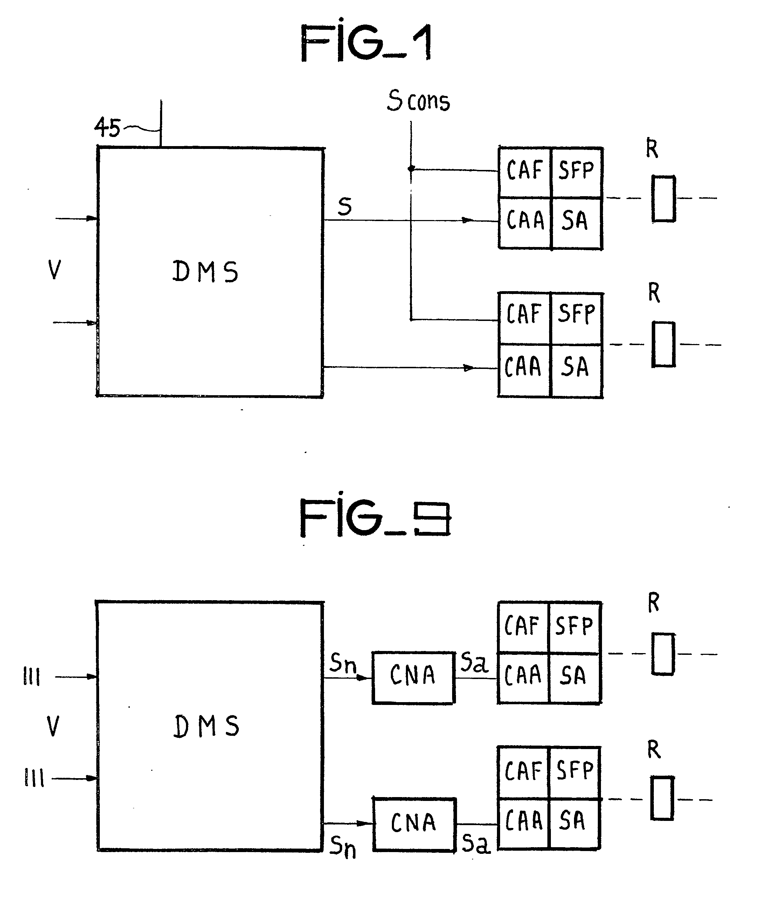

Selon la figure 1, un dispositif suivant l'invention comprend un dispositif de mesure et de sélection DMS qui reçoit un certain nombre de signaux v représentatifs de la vitesse du mobile à freiner ainsi que la vitesse des roues à freiner qui sont réparties en groupes dont chacun comprend au moins une roue. Le dispositif DMS peut également recevoir par une ligne 45 des signaux d'autorisation. Le dispositif de mesure et de sélection DMS produit en sortie des signaux S représentatifs de l'état dans lequel se trouve au moins une roue de chaque groupe par rapport à une condition de dérapage qui sera explicitée plus loin dans la description.

A chaque groupe de roues, est associé un circuit d'actionnement de freinage CAF, par exemple un amplificateur d'asservissement suivant une fonction de transfert donnée et un système de freinage principal SFP constitué par exemple par une servo-valve répondant à une commande, $s_{CONS}$, à l'entrée du circuit CAF.

A chaque groupe de roues, est associé également un circuit d'actionnement d'antidérapage CAA, par exemple un amplificateur d'asservissement suivant une fonction de transfert donnée et un système antidérapant SA, constitué par exemple par une servo-valve qui crée une chute de pression dans le circuit de frein correspondant dans le cas où au moins une roue du groupe atteint une condition de dérapage.

Les deux servo-valves mentionnées ci-dessus peuvent être distinctes ou non, comme il est enseigné dans la demande de brevet français N° 2 372 058 déjà mentionnée.

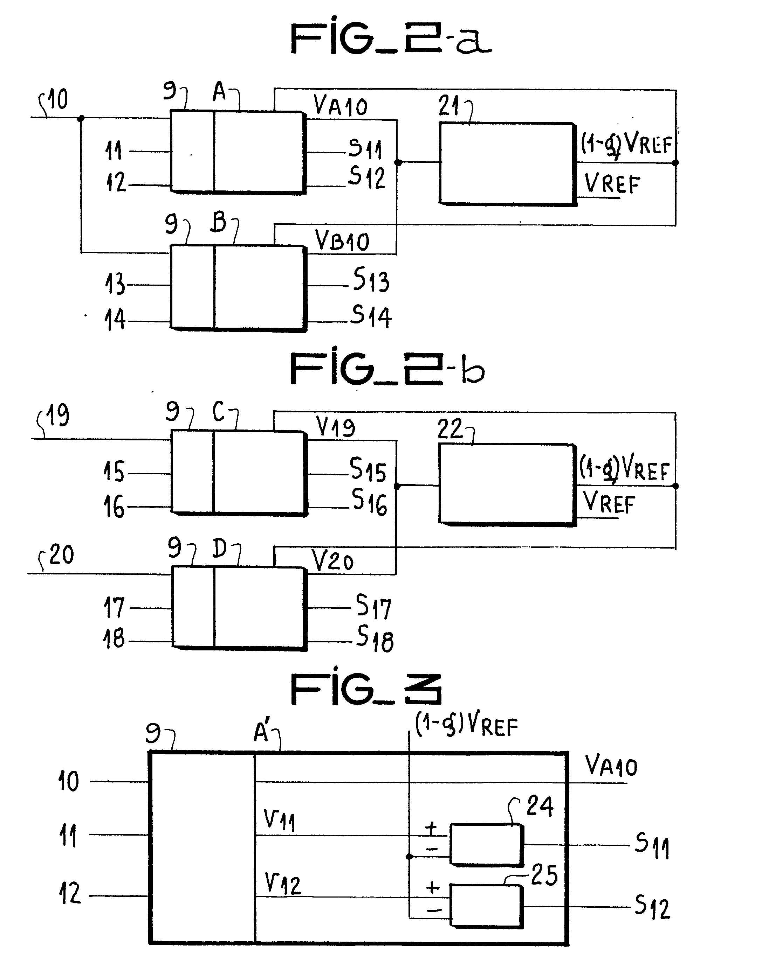

Selon la figure 2a, un signal 10 représentatif de la vitesse d'un mobile à freiner, par exemple sous la forme d'un signal numérique de fréquence proportionnelle à la vitesse, est introduit dans les circuits d'entrée 9, par exemple des compteurs d'impulsions lus cycliquement et mesurant la fréquence des impulsions, de deux dispositifs de mesure respectivement A et B. Le circuit de mesure A reçoit également des signaux 11 et 12 représentatifs de la vitesse de deux roues à freiner. Le circuit de mesure B reçoit également des signaux 13 et 14 représentatifs de la vitesse de deux autres roues à freiner. Les deux valeurs $V_{A10}$ et $v_{B10}$ de la vitesse du mobile mesurées par A et B, sont introduites dans un dispositif de sélection 21. Ce dispositif de sélection a pour fonction d'élaborer une vitesse de référence $V_{REF}$ représentant la vitesse du mobile à partir des valeurs mesurées de la vitesse $V_a$ du mobile. Cette vitesse de référence est réintroduite dans les circuits de mesure sous une forme pondérée comme on va l'expliquer ci-dessous.

Le système antidérapant selon l'invention est du type où un défreinage, c'est-à-dire une diminution de l'action de freinage, est appliqué à une roue lorsque sa vitesse v est inférieure à la vitesse du mobile pondérée par un coefficient de glissement toléré $g_T$, avec $v \leq V_{REF}(I-g_T)$

(On rappelle la définition générale du glissement:

$$g = \frac{V_a-v}{V_a};$$

Ce qui correspond à: $v = V_a(I-g)$.

Un défreinage sera provoqué sur une roue ou sur un groupe de roues lorsque la vitesse d'au moins une roue de ce groupe sera inférieure à $V_{REF}(I-g_T)$.

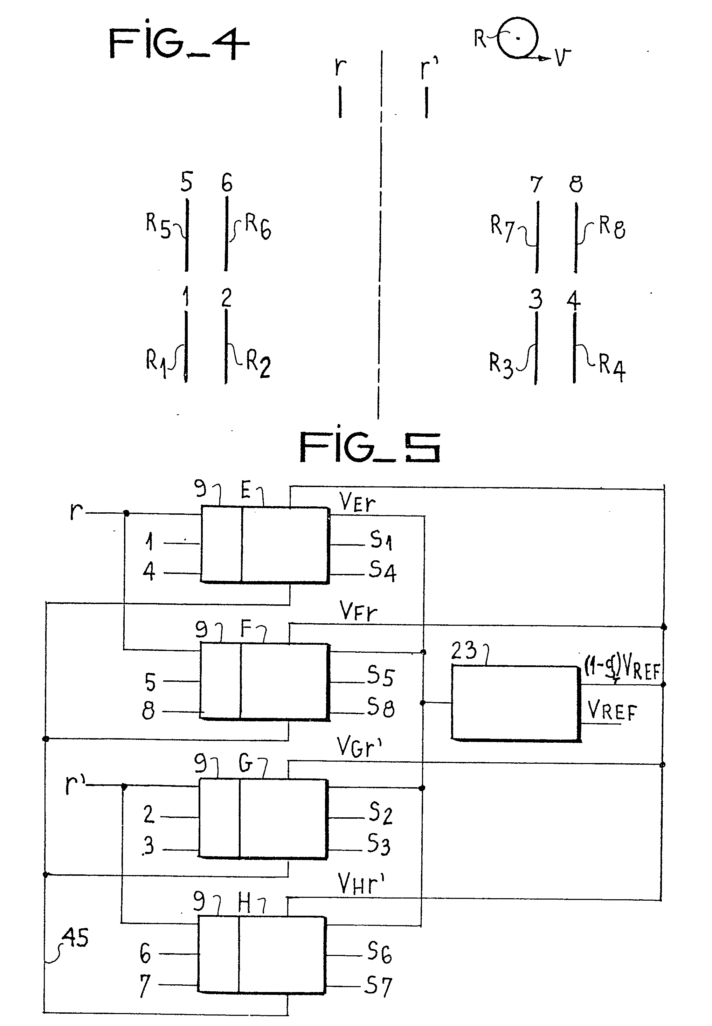

Dans l'exemple de la figure 2a, le signal $V_{REF}$ multiplié par $I-g_T$ qui représente une vitesse de référence pondérée, est réintroduit dans les circuits de mesure A et B où il est comparé respectivement aux valeurs mesurées de la vitesse des roues à freiner 11 et 12, et 13 et 14. Si dans le circuit de mesure A, la vitesse de l'une des roues 11 et 12 est inférieure à la vitesse tolérée, à savoir la vitesse de référence pondérée, un signal de commande du système antidérapant sera présent en sortie. Ceci peut être réalisé en calculant dans le circuit de mesure A les différences entre les vitesses respectives des roues 11 et 12, $V_{11}$ d'une part et $V_{12}$ d'autre part avec la vitesse de référence multipliée par le facteur $(I-g_T)$. Si l'un des deux résultats de ce calcul est négatif, le système antidérapant sera actionné, provoquant un défreinage de la roue susceptible de se bloquer. Ceci est représenté à la figure 3 où les valeurs $V_{11}$ et $V_{12}$ représentatives de la vitesse des roues 11 et 12 sont introduites à l'entrée plus de deux amplificateurs soustracteurs respectivement 24 et 25 et la vitesse de référence multipliée par le facteur $(I-g_T)$ à l'entrée négative de ces amplificateurs. Le résultat se présente sous la forme d'un signal $S_{11}$ à la sortie du soustracteur 24 et un signal $S_{12}$ à la sortie du soustracteur 25. On pourrait utiliser séparément chacun des signaux $S_{11}$ et $S_{12}$ pour commander séparément des défreinages des roues 11 et 12 le cas échéant. Cependant, il est préférable que les roues 11 et 12 soient des roues symétriques par rapport à l'axe de déplacement du véhicule et que l'on choisisse le plus petit des signaux $S_{11}$ et $S_{12}$ comme signal de commande de défreinage. On peut utiliser une commande de défreinage commune aux roues 11 et 12 ou bien utiliser le signal commun pour commander deux systèmes de défreinage distincts. On peut ainsi n'introduire dans chaque circuit de mesure qu'un seul signal représentatif de la vitesse d'une seule roue à freiner.

Le circuit B de la figure 2a est susceptible de fonctionner d'une manière analogue.

Le mode d'élaboration du signal de commande du système antidérapant décrit ci-dessus n'a été donné qu'à titre indicatif; il est en effet possible de produire un signal significatif d'une condition d'antidérapage par d'autres moyens que le calcul indiqué ci-dessus, notamment en ce qui concerne la vitesse de référence pondérée.

La figure 2b est une variante du dispositif suivant la figure 2a où deux signaux 19 et 20 représentatifs de la vitesse du véhicule mais provenant cette fois-ci de capteurs distincts, sont introduits respectivement dans les circuits de mesure C et D pourvus de circuits d'entrée 9. Ces circuits d'entrée 9 des circuits de mesure C et D reçoivent respectivement les signaux représentatifs de la vitesse des roues à freiner 15 et 16, et 17 et 18. Les signaux $V_{19}$ et $V_{20}$ de mesure de la vitesse du mobile sont introduits dans un dispositif de sélection 22 qui sera destiné à produire une vitesse de référence qui sera réintroduite sous forme pondérée dans les circuits de mesure C et D comme on l'a vu dans le cas de la figure 2a.

Considérons maintenant, que ce soit dans le cas de la figure 2a ou de la figure 2b, que des pannes interviennent au niveau de la mesure de la vitesse du mobile à freiner. Tant qu'il reste une valeur acceptable pour la vitesse du mobile à freiner, il sera toujours possible de produire une vitesse de référence significative qui sera réintroduite dans les deux sous-systèmes, respectivement A et B, et C et D. Par contre, si aucun signal de mesure de la vitesse du mobile n'est plus disponible, le dispositif de sélection 21 ou 22 élaborera alors une vitesse de référence de substitution. Cette vitesse de référence de substitution peut être simplement une loi prédéterminée qui sera une fonction décroissante du temps à partir de la dernière valeur disponible acceptable de la vitesse du mobile. Il est également possible de générer une vitesse de référence de substitution à partir des vitesses mesurées des roues à freiner. Pour ce faire, les valeurs représentatives des vitesses des roues à freiner sont alors également introduites dans le circuit de sélection. En effet, il est possible, dans certains cas, de retrouver la vitesse du mobile à freiner à partir de la vitesse des roues freinées, par exemple de la moyenne de celles-ci, ou de la plus grande d'entre elles.

La figure 4 représente un schéma d'une disposition des roues d'un avion. Les huit roues du train d'atterrissage principal sont réparties en deux rangées de quatre, respectivement $R_1$, $R_2$, $R_3$, $R_4$, et $R_5$, $R_6$, $R_7$, $R_8$. Les roues $R_1$ et $R_4$, $R_2$ et $R_3$, $R_5$ et $R_8$, et $R_6$ et $R_7$, sont symétriques par rapport à l'axe de déplacement de l'avion. L'avion comporte également deux roulettes avant r et r' qui sont également symétriques par rapport à l'axe de déplacement de l'avion. Une roue R est animée d'une vitesse tangentielle v.

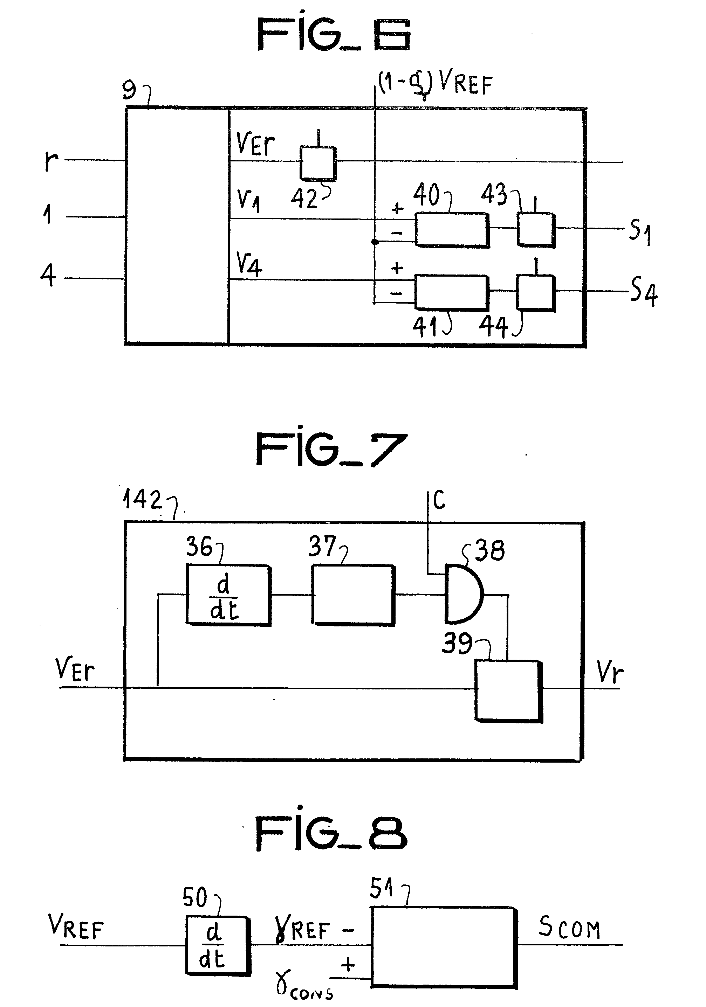

La figure 5 décrit un dispositif de commande de système de freinage antidérapant correspondant à la configuration de la figure 4. Le signal de mesure représentatif de la vitesse de la roulette avant r est introduit dans le circuit d'entrée 9 du dispositif de mesure E ainsi que dans le circuit d'entrée 9 du dispositif de mesure F. De même, le signal représentatif de la vitesse de la roulette r' est introduit dans le circuit d'entrée 9 du dispositif de mesure G et dans le circuit d'entrée 9 du dispositif de mesure H. Les signaux représentatifs de la vitesse des roues $R_1$ et $R_4$ sont introduits dans le circuit d'entrée 9 du dispositif de mesure E, les signaux représentatifs de la vitesse des roues $R_5$ et $R_8$ sont introduits dans le circuit d'entrée 9 du dispositif de mesure F, et les signaux représentatifs de la vitesse des roues $R_2$ et $R_3$ sont introduits dans le circuit d'entrée 9 du dispositif de mesure G, et les signaux représentatifs de la vitesse des roues $R_6$ et $R_7$ sont introduits dans le circuit d'entrée 9 du dispositif de mesure H. Le dispositif de sélection 23 reçoit les signaux $V_{Er}$ qui représente la vitesse de la roulette r mesurée par le circuit de mesure E, $v_{Fr}$ qui représente la vitesse de la roulette avant mesurée par le circuit de mesure F, $v_{Gr}$ qui représente la vitesse de la roulette r' mesurée par le dispositif de mesure G, et $v_{Hr'}$ qui représente la vitesse de la roulette r' mesurée par le dispositif de mesure H. La vitesse de référence $V_{REF}$ est alors générée par le dispositif de sélection 23.

La vitesse de référence pondérée sera introduite dans les dispositifs de mesure E, F, G et H de manière à produire des signaux de commande pour le système antidérapant. Comme on l'a dit précédemment, il est préférable d'élaborer en sortie de chaque dispositif de mesure un signal de commande du système antidérapant qui corresponde à la plus lente des roues freinées. On sera ainsi d'une part sûr de ne pas être trop près des conditions de blocage, et d'autre part, le défreinage sera homogène sur deux roues d'une paire symétrique. Comme dans le cas précédent, on peut commander le défreinage de deux roues symétriques à l'aide d'un circuit unique ou de deux circuits séparés, étant entendu qu'il est de toute façon préférable d'utiliser le même signal de commande, ou bien freiner les roues de façon indépendante en n'introduisant dans chaque circuit de mesure qu'un seul signal représentatif de la vitesse d'une seule roue à freiner.

Le système décrit dans la figure 5 sera à même de délivrer une vitesse de référence tant qu'au moins une mesure significative ou acceptable de la vitesse du mobile sera présente. Au cas où aucune mesure de la vitesse du mobile ne serait possible, il est prévu d'utiliser une vitesse de substitution. La valeur de référence est alors élaborée à partir d'une loi de substitution qui est soit une loi prédéterminée, et correspondant à une décélération, soit une loi qui est élaborée à partir des valeurs de mesure représentatives des roues freinées qui sont alors introduites dans le dispositif de sélection 23.

Par référence à la figure 9, le dispositif de mesure et de sélection DMS reçoit des signaux numériques représentatifs de la vitesse v du mobile à freiner ainsi que de la vitesse des roues à freiner. Le dispositif DMS produit en sortie des signaux numériques $S_n$ représentatifs de l'état dans lequel se trouve au moins une roue de chaque groupe par rapport à une condition de dérapage.

Chacun des signaux $S_n$ est alors introduit dans un convertisseur numérique-analogique CNA produisant chacun un signal analogique de commande $S_a$ qui est introduit dans le circuit d'actionnement d'antidérapage CAA correspondant.

Selon un mode de réalisation avantageux, un dispositif de commande selon l'invention, par exemple selon la figure 5, comporte un dispositif numérique de sélection qui élabore une vitesse de référence $V_{REF}$ à partir d'au moins une valeur mesurée de la vitesse du mobile lorsqu'au moins une valeur mesurée de ladite vitesse est acceptable et une vitesse de référence $V_{REF}$ selon une loi de substitution dans le cas contraire, un dispositif de mesure numérique de la vitesse du mobile transmise au dispositif de sélection et un dispositif de mesure numérique de vitesse de chaque roue d'au moins un groupe de roues à freiner, et un circuit d'actionnement du système antidérapant associé à au moins un groupe de roues freinées et comprenant un circuit numérique élaborant un signal de commande dès que la vitesse d'au moins une roue du groupe qui lui est associée est inférieure à la vitesse de référence $V_{REF}$ pondérée par un glissement toléré g, un convertisseur numérique-analogique dudit signal de commande et un circuit analogique d'actionnement d'antidérapage.

Les mesures peuvent être réalisées en technique numérique grâce à des capteurs donnant une fréquence proportionnelle à la vitesse des roues, les circuits d'entrée 9 étant alors des compteurs de fréquence lus cycliquement. La réalisation est simplifiée du fait que les seules parties analogiques concernent les asservissements.

Sur le dispositif représenté à la figure 5, on voit que des signaux logiques peuvent être amenés par une ligne 45 aux dispositifs de mesure E, F, G et H de manière à n'autoriser la transmission des valeurs de mesure de la vitesse du mobile vers le dispositif de sélection que lorsque certaines conditions sont remplies. Il va de soi que de tels signaux d'autorisation peuvent être utilisés dans le cas des autres modes de réalisation de l'invention.

Dans le cas d'un aéronef, ces conditions sont relatives à la vérification du fait que l'avion est bien posé au sol. Dans le cas où la mesure est réalisée autrement que par les roulettes avant de l'avion, par exemple par un radar Doppler ou par des balises au sol, la condition de transmission de la valeur de mesure de la vitesse du mobile au dispositif de sélection est un signal représentatif du fait que l'avion est posé en position dite deux points, c'est-à-dire que les roues du train principal sont bien posées sur la piste. Dans le cas où la mesure de la vitesse du mobile est réalisée à l'aide des roulettes avant, la condition de transmission sera que l'avion est en position trois points, c'est-à-dire que les roulettes avant sont également en contact avec le sol.

A la figure 6, on a représenté un mode de réalisation du dispositif de mesure E sous la référence E'. La vitesse de référence pondérée est introduite à la borne moins des soustracteurs 40 et 41 et les valeurs mesurées $v_1$ et $v_4$ de la vitesse des roues freinées $R_1$ et $R_4$ est introduite à la borne plus respectivement des soustracteurs 40 et 41. La transmission de la valeur mesurée $v_{Er}$ de la roulette r n'est assurée que lorsqu'un signal d'autorisation est présent à l'entrée du circuit d'autorisation 42. De même, des signaux représentatifs de la commande du système antidérapant ne sont transmis à partir de la sortie des soustracteurs 40 et 41 qu'en présence de signaux d'autorisation respectivement à l'entrée des circuits d'autorisation 43 et 44. On est ainsi certain que la commande de défreinage ne sera mise en service que lorsque l'avion sera véritablement posé au sol.

On comprendra qu'il est également envisageable de transmettre les mesures au dispositif de sélection dans tous les cas et d'utiliser les signaux d'autorisation au niveau du dispositif de sélection. Dans ce cas, il n'est plus nécessaire d'amener les signaux logiques aux dispositifs de mesure.

De plus, l'utilisation de signaux d'autorisation au niveau du dispositif de sélection peut permettre la production d'une vitesse de référence de substitution particulière lorsque l'avion n'est pas posé.

Nous allons maintenant envisager les cas où les mesures de la vitesse du mobile ne peuvent être considérées comme acceptables.

Un premier cas est relatif à une panne d'un ou plusieurs capteurs de la vitesse du mobile. Comme il apparaît de la description ci-dessus, le circuit de sélection est à même en l'absence d'une valeur de mesure, d'utiliser une autre valeur acceptable. Par exemple, le critère du circuit de sélection peut être de retenir la plus grande des valeurs mesurées pour la vitesse du mobile. En effet, si un capteur ne donne plus de signal de sortie, la valeur de la vitesse mesurée sera zéro et par conséquent, la mesure sera automatiquement éliminée par le circuit de sélection.

Par référence à la figure 7, envisageons des défauts relatifs à la mesure de la vitesse du mobile au cas où une ou plusieurs roulettes supplémentaires non freinées sont utilisées pour la mesure de la vitesse.

Au cas où une roulette non freinée serait sujette à un phénomène d'hydroplanage, un mode de détection de ce phénomène est réalisé dans le circuit de mesure E' de la figure 6, et plus particulièrement au niveau du circuit d'autorisation 42 dont un mode de réalisation est représenté à la figure 7 sous le repère 142. La valeur mesurée $v_{Er}$ de la roulette r est introduite dans un dérivateur 36 dont la sortie communique avec l'entrée d'un circuit à seuil 37. Au cas où un phénomène d'hydroplanage s'amorce, la roulette r voit sa vitesse diminuer brutalement et par conséquent, son accélération se voit affectée d'une valeur négative élevée. Tant que l'accélération de la roulette r est supérieure à un seuil négatif prédéterminé, un signal d'autorisation sera délivré à une porte ET 38 dont l'autre entrée reçoit un signal d'autorisation C représentatif des conditions du mobile à freiner.

On peut également utiliser le même circuit pour détecter la crevaison d'une roulette avant. Lors d'une crevaison, la vitesse de la roulette augmente et dans ces conditions, l'accélération de celle-ci devient positive. Par conséquent, le circuit 37 ne doit délivrer de signal d'autorisation que si l'accélération est négative. Pour tenir compte des deux phénomènes ci-dessus, le circuit 37 est donc un circuit à double seuil.

On peut également comparer la vitesse des roulettes avant avec celle des roues à freiner, par exemple dans le circuit de sélection, de manière à détecter l'hydroplanage et/ou l'éclatement d'un pneu.

Par référence à la figure 8, une vitesse de référence $V_{REF}$ élaborée par un dispositif de sélection suivant l'invention, est introduit dans un dérivateur 50 pour donner un signal d'accélération de référence $\gamma_{REF}$ qui est introduit à la borne négative d'un comparateur 51. La borne positive du comparateur 51 reçoit la valeur d'accélération de consigne $\gamma_{CONS}$ qui correspond à la décélération souhaitée par le pilote du mobile à freiner. Le signal de sortie $S_{CONS}$ est alors appliqué au dispositif de freinage du mobile.

On voit donc que, quel que soit l'état de fonctionnement des dispositifs de mesure de la vitesse du mobile, le dispositif antidérapant est toujours affecté d'une valeur de vitesse de référence permettant un fonctionnement approché correspondant aux conditions réelles de freinage. De plus, la valeur de la vitesse de référence qui est introduite comme valeur de mesure dans le système de freinage principal, par exemple sous la forme de sa dérivée $\gamma_{REF}$, est toujours susceptible d'assurer un fonctionnement en sécurité, tant des systèmes de freinage que des systèmes antidérapants.

Considérons, en effet, le cas où les vitesses mesurées du mobile n'étant pas acceptables, une valeur de la vitesse de référence est programmée selon une loi correspondant à une décélération modérée.

Comme la valeur de consigne $\gamma_{CONS}$ correspond à un freinage plus important que la décélération programmée de la vitesse de référence, le signal de commande de freinage va croître et ainsi la vitesse des roues va se trouver rapidement au niveau du glissement maximal toléré par rapport à la vitesse de référence. Il s'ensuit que l'avion va freiner avec une vitesse de roues égale à: $V_{REF}(I-g_T)$. On voit ainsi tout l'intérêt de ce système dans des cas de freinages dans des conditions dangereuses, par exemple lorsque les roues avant ont été sujettes à un hydroplanage. En effet, si dans ce cas l'avion continuait à freiner avec une accélération correspondant à l'accélération de consigne $\gamma_{CONS}$, on aboutirait certainement à des problèmes de blocage des roues étant donné que l'adhérence de celles-ci avec le sol se trouverait être plus faible, et que le système antidérapant se trouverait de plus hors service. En utilisant une loi de décroissance de la vitesse de référence plus modérée, on évite ce genre de phénomène et notamment dans les cas les plus dangereux.

La présente invention ne se limite pas au mode de réalisation décrit ci-dessus à titre non limitatif. Par exemple, il n'est pas nécessaire qu'un dispositif de mesure de vitesse soit associé à chaque groupe de roues à freiner, il peut suffire d'associer à la mesure de vitesse à deux groupes de roues à freiner seulement, ce qui permet au dispositif de sélection de fonctionner en sécurité grâce à des mesures redondantes. Les dispositifs de mesure associés aux autres groupes de roues à freiner ne recevront comme mesures que celles de la vitesse de chacune des roues du groupe.

## Revendications

1. Dispositif antidérapant pour système de freinage dans lequel on mesure la vitesse d'un aéronef à freiner et celle de roues à freiner et comprenant: un dispositif de sélection élaborant une vitesse de référence à partir d'au moins une valeur mesurée de la vitesse de l'aéronef, lorsqu'au moins une valeur mesurée de ladite vitesse est acceptable, et élaborant une vitesse de référence selon une loi de substitution dans le cas contraire, et un circuit d'actionnement d'un système antidérapant produisant une diminution de l'action de freinage produite par un système de commande de freinage lorsque la vitesse d'au moins une roue freinée est inférieure à ladite vitesse de référence, pondérée par un coefficient de glissement toléré, caractérisé par le fait que les roues à freiner sont constituées en groupes de roues comportant des roues placées symétriquement par rapport à l'axe de l'aéronef, chaque groupe comprenant un circuit d'actionnement, qu'il comporte au moins deux dispositifs de mesure (A à H) de vitesse associés respectivement à au moins deux groupes de roues à freiner et comprenant chacun une mesure de la vitesse de l'aéronef et une mesure de la vitesse de chacune des roues du groupe, l'action de défreinage n'étant exercée que sur les groupes de roues dont au moins une roue est proche des conditions de blocage.

2. Dispositif selon la revendication 1, caractérisé par le fait que la vitesse de référence est commune à tous les groupes de roues à freiner et est élaborée à partir de l'ensemble des valeurs mesurées de la vitesse de l'aéronef.

3. Dispositif selon la revendication 1 ou 2, caractérisé par le fait qu'il comporte un circuit (50) produisant une valeur de mesure dans le système de commande de freinage à partir de la vitesse de référence $V_{REF}$ du dispositif antidérapant.

4. Dispositif suivant la revendication 3, caractérisé par le fait que la dérivée $\gamma_{REF}$ de la vitesse de référence est utilisée comme valeur de mesure.

5. Dispositif selon l'une quelconque des revendications précédentes, caractérisé par le fait que la mesure de la vitesse de l'aéronef n'est transmise au dispositif de sélection qu'en présence d'un signal d'autorisation.

6. Dispositif selon l'une quelconque des revendications précédentes, caractérisé par le fait que les mesures sont réalisées en technique numérique.

7. Dispositif selon l'une quelconque des revendications précédentes, caractérisé par le fait qu'un signal numérique correspondant à la vitesse de l'aéronef et un signal numérique correspondant à la vitesse de chacune des roues d'un groupe sont introduits dans un compteur de fréquence (9) lu cycliquement.

8. Dispositif selon l'une quelconque des revendications 6 ou 7, caractérisé par le fait que le dispositif de sélection (21, 22, 23) est un circuit numérique.

9. Dispositif selon l'une quelconque des revendications 6 à 8, caractérisé par le fait qu'un circuit d'actionnement d'un système antidérapant comprend un circuit numérique élaborant un signal de commande dès que la vitesse d'au moins une roue du groupe qui lui est associée est inférieure à la vitesse de référence $V_{REF}$ pondérée par un glissement toléré $g_T$, un convertisseur numérique-analogique dudit signal de commande et un circuit analogique d'asservissement d'antidérapage.

10. Dispositif selon l'une quelconque des revendications précédentes, caractérisé par le fait qu'un signal de mesure de la vitesse de l'aéronef n'est transmis au dispositif de sélection (21, 22, 23) que lorsqu'un signal (45) représentatif d'un atterrissage est présent.

11. Dispositif selon la revendication 10, caractérisé par le fait que la mesure de la vitesse de l'aéronef est réalisée grâce à des capteurs disposés dans chacune des roulettes avant (r, r').

12. Dispositif selon la revendication 10 ou 11, caractérisé par le fait que la mesure de la vitesse de l'aéronef n'est transmise au dispositif de sélection qu'au cas où un signal (45) représentatif d'un atterrissage trois points est présent.

13. Dispositif selon l'une quelconque des revendications précédentes, caractérisé par le fait que les signaux (v) représentatifs de la vitesse des roues à freiner sont également introduits dans le circuit de sélection.

14. Dispositif selon l'une quelconque des revendications précédentes, caractérisé par le fait que ladite loi de substitution est une loi prédéterminée.

15. Dispositif selon l'une des revendications 1 à 13, caractérisé par le fait que ladite loi de substitution est élaborée à partir des mesures de vitesse des roues à freiner.

**Claims**

1. Antiskid device for a braking system wherein the speed of an aircraft to be slowed down and that of the wheels to be slowed down are measured, and comprising: a selection device generating a reference speed from at least one measured value of the aircraft speed when at least one measured value of said speed is acceptable, and generating a reference speed according to a substitution law in the contrary case, and an actuating circuit of an antiskid system producing a reduction of the braking action produced by a braking control system when the speed of at least one braked wheel is smaller than said reference speed, weighted by a coefficient of tolerated skidding, characterized in that the wheels to be slowed down constitute wheel groups comprising wheels arranged symmetrically with respect to the axis of the aircraft, each group comprising an actuating circuit, that it comprises at least two speed measurement devices (A to H) respectively associated with at least two groups of wheels to be slowed down and each comprising a measurement of the aircraft speed and a measurement of the speed of each of the wheels of the group, the releasing of braking occurring only in the groups of wheels where at least one wheel is close to the blocking conditions.

2. Device according to claim 1, characterized by the fact that the reference speed is common to all of the groups of wheels to be slowed down and is generated from the entirety of the measured values of the aircraft speed.

3. Device according to claim 1 or 2, characterized by the fact that it comprises a circuit (50) producing a measurement value in the braking control system from the reference speed $V_{REF}$ of the antiskid device.

4. Device according to claim 3, characterized by the fact that the derivative $\gamma_{REF}$ of the reference speed is used as measurement value.

5. Device according to any of the preceding claims, characterized by the fact that the measurement of the aircraft speed is transmitted to the selection device only in the presence of an enabling signal.

6. Device according to any of the preceding claims, characterized by the fact that the measurements are made in digital technique.

7. Device according to any of the preceding claims, characterized by the fact that a digital signal corresponding to the speed of the aircraft and a digital signal corresponding to the speed of each of the wheels of a group are introduced into a frequency counter (9) which is read cyclically.

8. Device according to any of claims 6 and 7, characterized by the fact that the selection device (21, 22, 23) is a digital circuit.

9. Device according to any of claims 6 to 8, characterized by the fact that an actuating circuit of an antiskid system comprises a digital circuit generating a control signal as soon as the speed of at least one wheel of a group associated therewith is smaller than the reference speed ($V_{REF}$) weighted by a tolerated skidding $g_T$, a digital-analog converter for converting said control signal and an analog antiskid control circuit.

10. Device according to any of the preceding claims, characterized by the fact that an aircraft speed measurement signal is transmitted to the selection device (21, 22) only when a signal (45) representative of a landing is present.

11. Device according to claim 10, characterized by the fact that the measurement of the aircraft speed is performed by using probes arranged in each of the front wheels (r, r').

12. Device according to claims 10 or 11, characterized by the fact that the measurement of the aircraft speed is transmitted to the selection device only in case a signal (45) representative of a three point landing is present.

13. Device according to any of the preceding claims, characterized by the fact that the signals (v) representative of the speed of the wheels to be slowed down are likewise introduced into the selection device.

14. Device according to any of the preceding claims, characterized by the fact that said substitution law is a predetermined law.

15. Device according to any of claims 1 to 13, characterized by the fact that said substitution law is generated from measurements of the speed of the wheels to be slowed down.


**Patentansprüche**

1. Rutschverhinderungsvorrichtung für Bremssystem, bei welchem die Geschwindigkeit eines abzubremsenden Flugzeugs und die der abzubremsenden Räder gemessen werden, umfassend: eine Selektionsvorrichtung, welche eine Referenzgeschwindigkeit aus wenigstens einem Messwert der Flugzeuggeschwindigkeit erzeugt, wenn wenigstens ein Messwert der genannten Geschwindigkeit akzeptabel ist, und im entgegengesetzten Falle eine Referenzgeschwindigkeit nach einem Substitutionsgesetz erzeugt, und eine Betätigungsschaltung für ein Rutschverhinderungssystem, welches eine Verminderung der durch ein Bremssteuersystem erzeugten Bremswirkung hervorruft, wenn die Geschwindigkeit wenigstens eines abgebremsten Rades geringer als die genannte, mit einem Koeffizienten für ein toleriertes Rutschen gewichtete Referenzgeschwindigkeit ist, dadurch gekennzeichnet, dass aus den abzubremsenden Rädern Radgruppen gebildet sind, welche symmetrisch zur Achse des Flugzeugs angeordnete Räder umfassen, wobei jede Gruppe eine Betätigungsschaltung umfasst, dass sie wenigstens zwei Geschwindigkeitsmessvorrichtungen (A bis H) umfasst, welche jeweils wenigstens zwei Gruppen von abzubremsenden Rädern zugeordnet sind und jeweils die Geschwindigkeit des Flugzeugs und die Geschwindigkeit jedes der Räder der Gruppe messen, wobei die Bremsenlösung nur an den Radgruppen erfolgt, bei denen wenigstens ein Rad an die Blockierbedingungen angenähert ist.

2. Vorrichtung nach Anspruch 1, dadurch gekennzeichnet, dass die Referenzgeschwindigkeit allen Gruppen von abzubremsenden Rädern gemeinsam ist und aus der Gesamtheit der Messgeschwindigkeitswerte des Flugzeugs erzeugt wird.

3. Vorrichtung nach Anspruch 1 oder 2, dadurch gekennzeichnet, dass sie eine Schaltung (50) umfasst, welche einen Messwert in dem Bremssteuersystem aus der Referenzgeschwindigkeit $V_{REF}$ der Rutschverhinderungsvorrichtung erzeugt.

4. Vorrichtung nach Anspruch 3, dadurch gekennzeichnet, dass die Ableitung $\gamma_{REF}$ der Referenzgeschwindigkeit als Messwert verwendet wird.

5. Vorrichtung nach einem der vorstehenden Ansprüche, dadurch gekennzeichnet, dass der Messwert der Flugzeuggeschwindigkeit zur Selektionsvorrichtung nur bei Anwesenheit eines Freigabesignals übertragen wird.

6. Vorrichtung nach einem der vorstehenden Ansprüche, dadurch gekennzeichnet, dass die Messungen in Digitaltechnik durchgeführt werden.

7. Vorrichtung nach einem der vorstehenden Ansprüche, dadurch gekennzeichnet, dass ein digitales, der Flugzeuggeschwindigkeit entsprechendes Signal und ein digitales, der Geschwindigkeit jedes der Räder einer Gruppe entsprechendes Signal in einen zyklisch ausgelesenen Frequenzzähler (9) eingegeben werden.

8. Vorrichtung nach Anspruch 6 oder 7, dadurch gekennzeichnet, dass die Selektionsvorrichtung (21, 22, 23) eine Digitalschaltung ist.

9. Vorrichtung nach einem der Ansprüche 6 bis 8, dadurch gekennzeichnet, dass eine Betätigungsschaltung für ein Rutschverhinderungssystem eine digitale Schaltung umfasst, welche ein Steuersignal erzeugt, sobald die Geschwindigkeit wenigstens eines Rades der zugeordneten Gruppe niedriger als die mit einem tolerierten Rutschen $g_T$ gewichtete Referenzgeschwindigkeit $V_{REF}$ ist, einen Digital/Analog-Umsetzer zur Umsetzung des genannten Steuersignals und eine analoge Rutschverhinderungs-Regelschaltung umfasst.

10. Vorrichtung nach einem der vorstehenden Ansprüche, dadurch gekennzeichnet, dass ein Flugzeuggeschwindigkeits-Messsignal zur Selektionsvorrichtung (21, 22, 23) nur übertagen wird, wenn ein Signal (45) vorhanden ist, welches für eine Landung repräsentativ ist.

11. Vorrichtung nach Anspruch 10, dadurch gekennzeichnet, dass die Messung der Flugzeuggeschwindigkeit durch Messwertaufnehmer geschieht, welche in jedem der vorderen kleinen Räder (r, r') angeordnet sind.

12. Vorrichtung nach Anspruch 10 oder 11, dadurch gekennzeichnet, dass der Messwert der Flugzeuggeschwindigkeit zur Selektionsvorrichtung nur in dem Fall übertragen wird, dass ein Signal (45) vorhanden ist, welches für eine Dreipunkt-Landung repräsentativ ist.

13. Vorrichtung nach einem der vorstehenden Ansprüche, dadurch gekennzeichnet, dass die Signale (v), welche für die Geschwindigkeit der abzubremsenden Räder repräsentativ sind, ebenfalls in die Selektionsschaltung eingegeben werden.

14. Vorrichtung nach einem der vorstehenden Ansprüche, dadurch gekennzeichnet, dass das genannte Substitutionsgesetz ein vorbestimmtes Gesetz ist.

15. Vorrichtung nach einem der Ansprüche 1 bis 13, dadurch gekennzeichnet, dass das genannte Substitutionsgesetz aus den Messwerten der Geschwindigkeit der abzubremsenden Räder erzeugt wird.

# FIG_1

# FIG_9

# FIG_2-a

# FIG_2-b

# FIG_3

# FIG_4

R ⊙ → V

r | r'

5 6
$R_5$ $R_6$

7 8
$R_7$ $R_8$

1 2
$R_1$ $R_2$

3 4
$R_3$ $R_4$

# FIG_5

r

9 E $V_{Er}$

1 — $S_1$
4 — $S_4$

$V_{Fr}$

9 F

5 — $S_5$
8 — $S_8$

23

$(1-q)V_{REF}$

$V_{REF}$

$V_{Gr'}$

9 G

r'

2 — $S_2$
3 — $S_3$

$V_{Hr'}$

9 H

45

6 — $S_6$
7 — $S_7$

# FIG_6

$(1-\mathfrak{q})V_{REF}$

9

$V_{Er}$

r

42

$V_1$

1

+ 40   43

−

$S_1$

$V_4$

4

+

−

41   44

$S_4$

# FIG_7

142

36   37   C   38

$\frac{d}{dt}$

$V_{Er}$

39

$V_r$

# FIG_8

$V_{REF}$

50

$\frac{d}{dt}$

$\gamma_{REF} -$

51

$S_{COM}$

$\gamma_{CONS}$   +